# FASCICULE DE BREVET EUROPEEN

(11) **EP 2 840 430 B1**
(45) Date de publication et mention de la délivrance du brevet: **25.09.2019**
(21) Numéro de dépôt: 14181218.0
(22) Date de dépôt: 18.08.2014
(51) Int. Cl.: G02B 27/24, G03B 35/08, G02B 15/177, G03B 17/17, H04N 13/239, G02B 27/10

(54) **Système de prise de vues stéréoscopique compact**
Kompaktes Stereobildaufnahmesystem
Compact stereoscopic viewfinder system

(30) Priorité: 23.08.2013 FR 1301972
(43) Date de publication de la demande: 25.02.2015
(73) Titulaire: Thales, 92400 Courbevoie (FR)
(72) Inventeur: Cadel, Maxime, 42000 SAINT ETIENNE (FR); Gonon, Xavier, 42570 SAINT HEAND (FR); Defay, Patrick, 42580 L'ETRAT (FR); Mujic, Elvir, 42170 ST JUST ST RAMBERT (FR); Narcy, Gabriel, 42570 SAINT HEAND (FR); Hun, Catherine, 42000 SAINT-ETIENNE (FR)
(74) Mandataire: Bréda, Jean-Marc

(56) Documents cités:
- WO-A2-01/86936
- WO-A2-2012/139128
- US-A1- 2012 163 788
- US-A1- 2012 163 791
- US-B1- 7 970 276

## Description

Le domaine de l'invention est celui des systèmes de prises de vue stéréoscopiques et plus particulièrement, ceux nécessitant deux caméras de prise de vue.

Plusieurs caméras et objectifs sont nécessaires à la prise de vue d'images suivant plusieurs angles de vue différents. Le rendu stéréoscopique peut s'appuyer uniquement sur deux images, une image gauche et une image droite ou sur un ensemble de plusieurs images dont une paire uniquement est visible par le spectateur en fonction de sa position devant le dispositif de projection. Ce dernier système permet la diffusion d'images 3D dites « multivues ». Le spectateur se déplaçant devant l'image projetée 3D voit les objets représentés se déplacer comme ils le feraient dans la réalité.

La vision « 3D » correspond à une interprétation par le cerveau d'images perçues par les deux yeux afin de donner une position aux objets dans l'espace. La position attribuée dépend des différences entre les images perçues par les deux yeux du spectateur. Si l'objet est en mouvement, les images doivent être synchrones, prises au même instant, afin que le déplacement de l'objet entre deux images gauche et droite prises successivement ne soit pas interprété comme une information de distance.

Il est connu de l'art antérieur des solutions optiques stéréoscopiques n'utilisant qu'un seul capteur. On citera, notamment, les brevets DE 10 2004/052253 et EP 0 969 308 qui décrivent des dispositifs stéréoscopiques comportant deux optiques d'entrée et un seul capteur pour reproduire deux points de vue. Il est également connu des solutions n'utilisant qu'une seule optique de tête. On citera, dans cette catégorie, les brevets US 6 335 833 et JP 2008/292513. Cependant, la plupart des systèmes de prise de vue comportent une paire de canaux généralement identiques.

Dans un système stéréoscopique de ce type, chaque canal ou caméra comporte trois sous-ensembles principaux qui sont :
Un boîtier capteur comportant un capteur photosensible et les moyens électroniques de commande associés ;
Un objectif optique qui est généralement un zoom dont le champ est variable. Sur ce type d'optique, trois paramètres au moins sont contrôlés, la focale qui détermine le champ, la mise au point qui détermine la distance de netteté et l'ouverture qui détermine l'éclairement reçu par le détecteur ;
Un dispositif électromécanique permettant de commander les valeurs des différents paramètres.

D'autres systèmes de prise de vue stéréoscopiques sont divulgués par US 2012/0163791 A1 et US 2012/0163788 A1.

Les deux caméras sont alors montées sur une plateforme mécanique commune qui comprend des réglages d'entre-axe et de convergence. Dans un premier mode de réalisation du système de prise de vues, les caméras sont simplement placées côte à côte, les axes optiques des objectifs étant dans un même plan, les optiques pouvant légèrement converger. Leur entraxe, toujours dans le même plan, est également réglable. La distance interpupillaire permet d'ajuster le degré de stéréoscopie. L'inconvénient de ce mode de réalisation est que la distance séparant les deux axes optiques des objectifs a nécessairement une valeur minimale liée à l'encombrement des optiques et de leurs supports. On limite ainsi, dans certaines configurations de prise de vue, l'effet stéréoscopique.

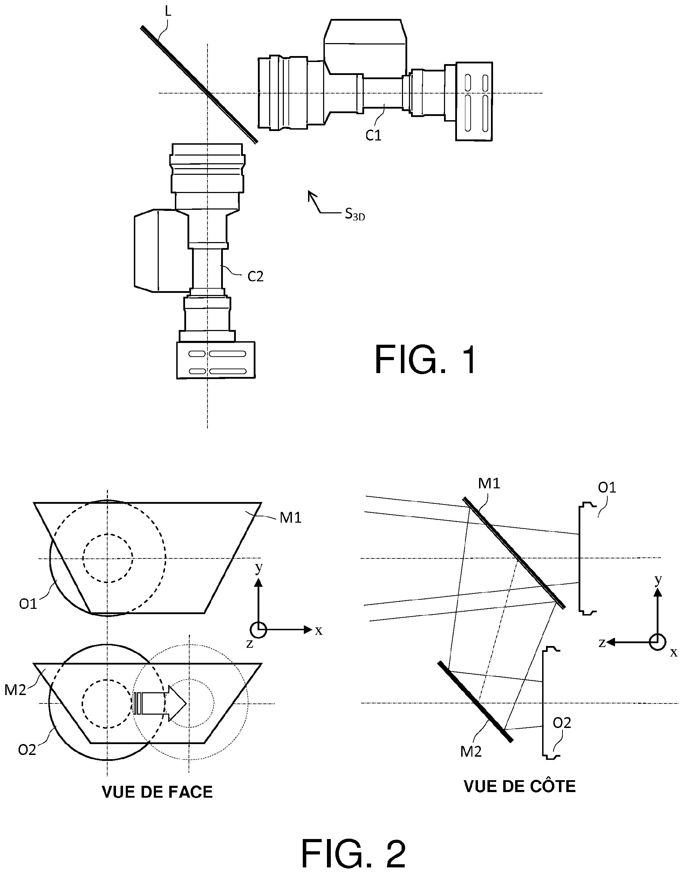

Le système S_{3D} représenté sur la figure 1 n'a pas cet inconvénient. Il comporte deux caméras C1 et C2 disposées perpendiculairement l'une par rapport à l'autre et séparées par une lame semi-réfléchissante L disposée à 45 degrés des axes des objectifs des caméras. Dans cette configuration, la contrainte mécanique disparaît et il est possible de séparer les axes optiques de la distance souhaitée au prix cependant d'une atténuation photométrique et d'une légère différence de trajet optique sur l'une des voies dues à l'épaisseur de la lame semi-réfléchissante.

On peut notamment reproduire des distances inter-pupillaires nulles. L'entraxe et la vergence entre les caméras/objectifs restent réglables. Cet agencement mécanique est malheureusement assez encombrant et l'ensemble opto-mécanique peut être délicat à manipuler, particulièrement pour des systèmes portables.

L'objet de l'invention est de rendre cette dernière configuration beaucoup plus compacte et compatible d'une utilisation portable à l'épaule par un caméraman en introduisant une seconde lame de renvoi, parallèle à la première lame semi-réfléchissante afin que les axes optiques des objectifs des caméras soient parallèles sans introduire de vignettages supplémentaires.

Plus précisément, l'invention a pour objet un système de prise de vues stéréoscopique selon la rev. indépendante 1.

Avantageusement, l'élément optique est un miroir réfléchissant plan incliné disposé devant le second objectif.

Avantageusement, la lame semi-réfléchissante plane et le miroir réfléchissant plan sont disposés solidairement dans une structure fixe, la première caméra et/ou la seconde caméra comportent des moyens mécaniques de réglage en translation par rapport à l'autre caméra.

Avantageusement, le miroir réfléchissant plan est solidaire de la seconde caméra de façon que ladite seconde caméra comportant des moyens mécaniques de réglage en translation par rapport à la première caméra, le miroir réfléchissant plan se déplace avec elle.

Avantageusement, le premier objectif optique comporte un sous-ensemble optique disposé à l'avant dudit premier objectif optique et comportant une lame de verre épaisse, l'élément optique étant un prisme de renvoi comportant ladite surface réfléchissante plane, l'épaisseur optique dudit prisme de renvoi étant identique à celle de la lame de verre épaisse.

Avantageusement, les deux sous-ensembles optiques ont des puissances optiques.

Avantageusement, le premier objectif optique et le second objectif optique sont des zooms à variateur optique convergent-divergent.

Avantageusement, les sous-ensembles situés à l'avant des objectifs comportent des groupes mobiles assurant la focalisation en fonction de la distance de la scène à observer.

Avantageusement, en position normale d'utilisation, les axes optiques du premier objectif optique et du second objectif optique sont dans un plan sensiblement vertical.

L'invention sera mieux comprise et d'autres avantages apparaîtront à la lecture de la description qui va suivre donnée à titre non limitatif et grâce aux figures annexées parmi lesquelles :
La figure 1 représente un système de prise de vues stéréoscopique dans une configuration à deux caméras selon l'art antérieur ;
La figure 2 représente une première configuration à miroir d'un système de prise de vues stéréoscopique qui ne fait pas partie de l'invention ;
La figure 3 représente une première variante de cette première configuration d'un système de prise de vues stéréoscopique qui ne fait pas partie de l'invention ;
La figure 4 représente une seconde variante de cette première configuration d'un système de prise de vues stéréoscopique qui ne fait pas partie de l'invention ;
La figure 5 représente le principe de fonctionnement du premier objectif d'une seconde configuration à prisme selon l'invention ;
La figure 6 représente le principe de fonctionnement du second objectif de ladite seconde configuration à prisme ;
La figure 7 représente l'assemblage du premier objectif et du second objectif de ladite seconde configuration à prisme ;
La figure 8 représente l'ensemble de la seconde configuration à prisme d'un système de prise de vues stéréoscopique.

A titre de premier exemple, la figure 2 représente une première configuration à miroir d'un système de prise de vues stéréoscopique qui ne fait pas partie de l'invention. Cette figure 2 comporte une vue de face et une vue de côté partielle référencées dans un référentiel (x, y, z). Sur ces vues, les miroirs ont été représentés ainsi que la partie avant des objectifs optiques. Les rayons lumineux délimitant les champs des caméras sont représentés en traits fins sur la vue de côté de cette figure 2 et sur les suivantes.

Sur cette figure 2, le système de prise de vues stéréoscopique comprend une première caméra comportant un premier objectif optique O1 et une seconde caméra comportant un second objectif optique O2, les caractéristiques optiques du premier objectif étant sensiblement identiques à celles du second objectif. Généralement, ces objectifs sont des zooms. Les axes optiques de ces deux objectifs sont parallèles entre eux et parallèles à l'axe z.

Le parallélisme des deux axes optiques est obtenu au moyen d'un ensemble optique comportant une lame semi-réfléchissante plane M1 disposée devant le premier objectif et inclinée d'un angle déterminé sur l'axe optique dudit premier objectif et un miroir plan réfléchissant M2 disposé au niveau du second objectif et incliné du même angle déterminé sur l'axe optique du second objectif. L'angle d'inclinaison est voisin de 45 degrés. Cette disposition de la lame semi-réfléchissante et du miroir permet de conserver une orientation d'image identique sur les deux voies optiques. Elle ne produit ni rotation, ni inversion d'image entre les deux voies de prise de vue.

Ainsi, une partie des rayons lumineux issus d'un objet dont on cherche à faire l'image stéréoscopique passe directement, en transmission, à travers la lame semi-réfléchissante plane M1 et est focalisée par le premier objectif. La seconde partie est réfléchie successivement par la lame semi-réfléchissante plane M1 et le miroir M2, puis est focalisée par le second objectif optique.

La seconde caméra avec son objectif 02 est montée sur une platine en translation permettant de faire varier la distance interpupillaire entre les axes optiques des deux objectifs O1 et O2 d'une valeur déterminée selon l'axe x. Les déplacements sur les figures 2, 3 et 4 sont représentés par une flèche transparente. Il est à noter qu'il est possible de faire ce déplacement selon l'axe y. Mais, cette configuration conduit à des encombrements importants et est plus pénalisante. Cette valeur de distance interpupillaire peut être nulle. Eventuellement, d'autres platines en rotation permettent de régler l'orientation d'une caméra par rapport à l'autre en assiette et en convergence. L'ensemble constitué par la lame semi-réfléchissante plane M1 et le miroir M2 est monté dans une structure fixe sans réglages de façon à minimiser son encombrement et sa masse.

La lame semi-réfléchissante M1 et le miroir M2 sont disposés de telle sorte que les distances entre l'objet et le premier objectif d'une part et l'objet et le second objectif sont sensiblement équivalentes en position nominale. Les positions et les dimensions des miroirs M1 et M2, la distance verticale les séparant et l'angle d'inclinaison sont optimisés afin qu'il n'y ait aucun vignettage important introduit quels que soient la focale du zoom et l'écart interpupillaire horizontal. Cette optimisation fait partie des connaissances générales de l'homme du métier. Comme on le voit sur la vue de face de la figure 2, la lame semi-réfléchissante et le miroir ont sensiblement des formes trapézoïdales.

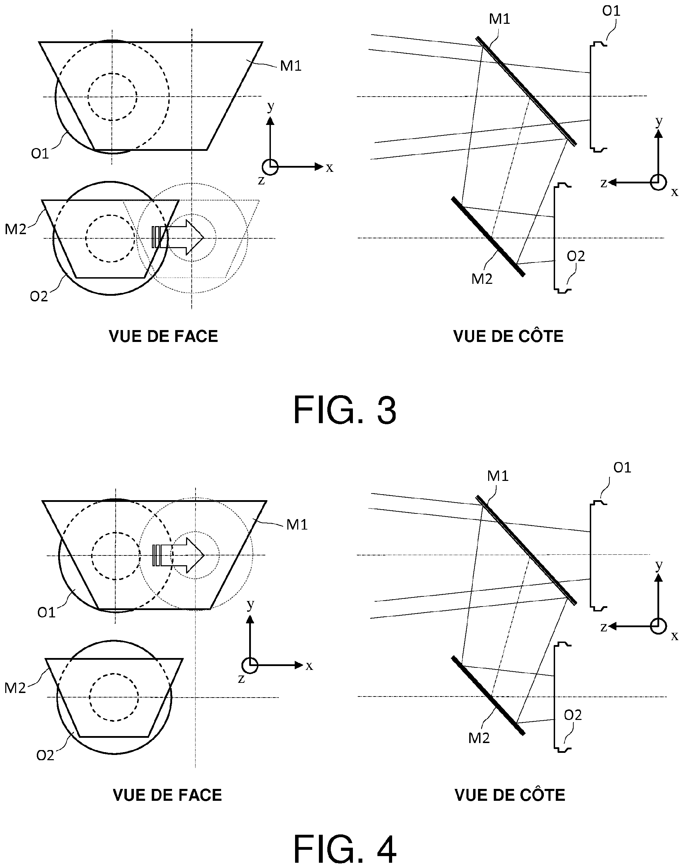

Dans cette première configuration, les miroirs sont fixes et de dimensions importantes. Il est possible de réduire l'encombrement du système en solidarisant le miroir M2 de la seconde caméra. Cette première variante de réalisation qui ne fait pas partie de l'invention, est illustrée sur la figure 3. Dans cette configuration, lorsque l'on déplace la seconde caméra avec son objectif 02 montée sur sa platine en translation, on déplace également le miroir M2. On réduit ainsi de façon importante les dimensions du miroir M2 mais au prix d'une plus grande complexité mécanique de la seconde caméra.

Enfin, une seconde variante de réalisation est illustrée sur la figure 4. Dans cette configuration, la lame semi-réfléchissante M1 et le miroir M2 sont fixes, la seconde caméra est également fixe. La première caméra avec son objectif O1 est montée sur une platine en translation. Dans cette dernière configuration, les miroirs sont de taille minimale et montés dans une structure fixe.

Les configurations précédentes peuvent nécessiter des lames semi-réfléchissantes et des miroirs de dimensions importantes, surtout si les champs et les pupilles sont de grandes dimensions. Aussi, il est possible de mettre en oeuvre un second type de configuration optique si l'agencement de l'objectif optique s'y prête. Dans cette configuration, le miroir M2 est remplacé par un prisme de renvoi faisant partie de la combinaison optique de l'objectif O2 et l'objectif O1 comporte une lame de verre épaisse, l'épaisseur optique du prisme de renvoi étant identique à celle de la lame de verre épaisse.

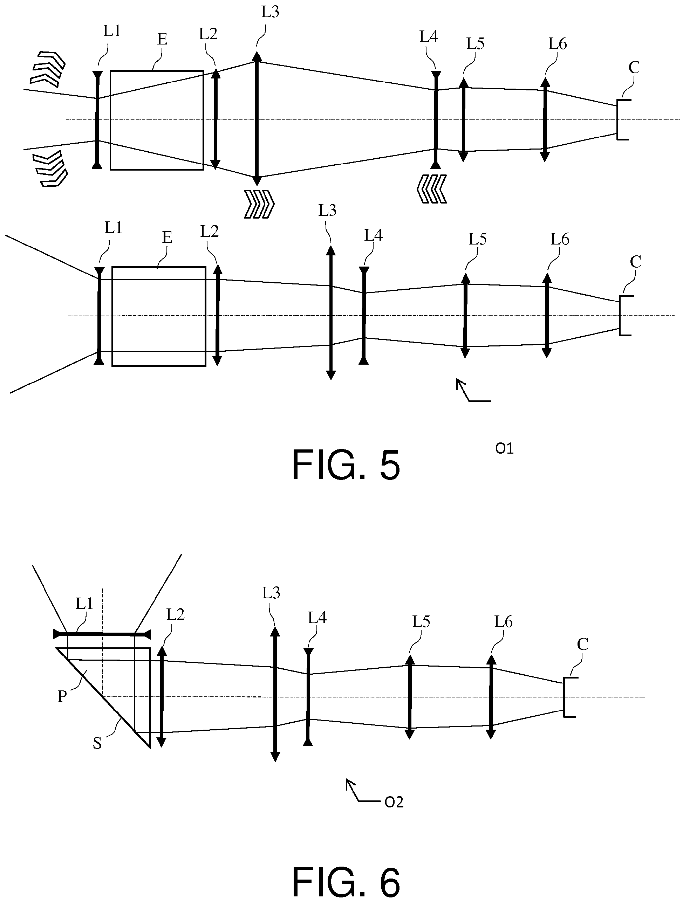

A titre d'exemple non limitatif, cette seconde configuration du système optique est illustrée sur les figures 5 à 8 dans le cas d'un zoom optique. Les objectifs O1 et O2 des deux caméras comportent six lentilles ou groupes de lentilles notés de L1 à L6. L'objectif O1 comporte une lame épaisse E et l'objectif O2 comporte un prisme P. Les objectifs O1 et O2 sont disposés devant des capteurs photosensibles D1 et D2. Les rayons lumineux délimitant les champs des caméras sont représentés en traits fins sur ces différentes figures.

Chaque zoom O1 et O2 comporte un premier ensemble situé à l'avant comprenant les groupes de lentilles L1 et L2, un second ensemble fixe situé à l'arrière du zoom comprenant les groupes de lentilles L5 et L6 et un troisième ensemble appelé variateur comprenant les groupes mobiles L3 et L4. Dans cet exemple, le variateur est du type convergent-divergent. Il est agencé de façon que, lorsque l'on rapproche les groupes optiques L3 et L4 selon une certaine loi, le champ donc la focale du zoom varie dans des proportions déterminées définissant le rapport du zoom, la mise au point restant inchangée. La figure 5 représente ce changement de focale. Sur cette figure, les changements de position des groupes et de champ induits sont représentés par des triplets de chevrons.

L'ensemble situé à l'avant comprend avantageusement des lentilles mobiles le long de leur axe optique pour pouvoir focaliser à distance finie et conserver cette focalisation quelle que soit la valeur de focale du zoom choisie.

La lame E et le prisme P ont les mêmes faces d'entrée, la même épaisseur optique et sont réalisés dans le même matériau. Ils sont donc optiquement identiques. Comme on le voit sur la figure 6, le prisme P comporte une surface réfléchissante S qui a la même fonction que le miroir M2 de la précédente configuration. Dans une variante, cette face S peut opérer selon un régime de réflexion totale.

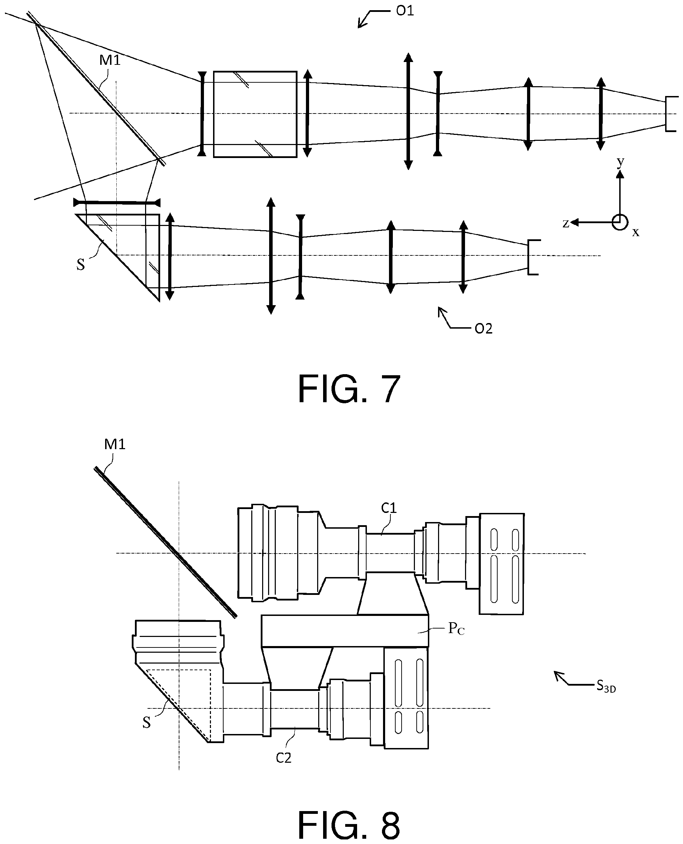

Le montage des deux objectifs O1 et O2 dans un système stéréoscopique est représenté en figure 7. Comme dans la configuration précédente, les deux objectifs sont séparés par une lame semi-réfléchissante M1. Les inclinaisons de cette lame semi-réfléchissante M1 et de la surface réfléchissante S sont identiques.

Le montage final des deux caméras C1 et C2 comprenant les objectifs O1 et O2 est représenté en figure 8. Les deux caméras sont montées tête-bêche sur une plateforme commune P_{C} qui comporte les différents réglages, notamment les réglages de convergence. L'ensemble forme le système stéréoscopique S_{3D}.

Cette solution technique permet d'aboutir à un système stéréoscopique plus compact avec la contrainte d'utiliser deux objectifs dont l'agencement optique est légèrement différent.

## Revendications

1. Système de prise de vues stéréoscopique comprenant une première caméra (C1) comportant un premier objectif optique (O1) et une seconde caméra (C2) comportant un second objectif optique (O2), les caractéristiques optiques du premier objectif étant sensiblement identiques à celles du second objectif, ledit système de prise de vues stéréoscopique comportant une lame semi-réfléchissante (M1) plane disposée devant le premier objectif et inclinée d'un angle déterminé sur l'axe optique dudit premier objectif, **caractérisé en ce que** :
le premier objectif optique comporte un sous-ensemble optique comportant deux groupes de lentilles (L1, L2) disposé à l'avant dudit premier objectif optique et comportant une lame de verre épaisse (E), ladite lame étant disposée entre le premier groupe de lentilles (L1) et le second groupe de lentilles (L2) dudit premier objectif optique et ;
le second objectif optique comportant un sous-ensemble optique (L1, L2) optiquement identique à celui du premier objectif dans lequel la lame épaisse est remplacée par un prisme (P) de renvoi comportant une surface réfléchissante plane, l'épaisseur optique dudit prisme de renvoi étant identique à celle de la lame de verre épaisse, ledit prisme étant disposée entre le premier groupe de lentilles (L1) et le second groupe de lentilles (L2) dudit second objectif optique, la dite surface réfléchissante plane étant opposée à la lame semi-réfléchissante (M1) par rapport au premier objectif optique (O1), orientée vers l'arrière du second objectif optique et inclinée sensiblement du même angle déterminé que celui de la lame semi-réfléchissante sur l'axe optique dudit second objectif de façon que la partie principale de l'axe optique du second objectif soit sensiblement parallèle à l'axe optique du premier objectif.

2. Système de prise de vues stéréoscopique selon la revendication 1, **caractérisé en ce que** les deux sous-ensembles optiques ont des puissances optiques.

3. Système de prise de vues stéréoscopique selon la revendication 1, **caractérisé en ce que** le premier objectif optique et le second objectif optique sont des zooms à variateur optique convergent-divergent (L3, L4).

4. Système de prise de vues stéréoscopique selon l'une des revendications précédentes, **caractérisé en ce que** les sous-ensembles situés à l'avant des objectifs comportent des groupes mobiles assurant la focalisation en fonction de la distance de la scène à observer.

5. Système de prise de vues stéréoscopique selon l'une des revendications précédentes, **caractérisé en ce que**, en position normale d'utilisation, les axes optiques du premier objectif optique et du second objectif optique sont dans un plan commun, sensiblement vertical.

## Patentansprüche

1. Stereoskopisches Abbildungssystem, umfassend eine erste Kamera (C1), die ein erstes optisches Objektiv (O1) umfasst, und eine zweite Kamera (C2), die ein zweites optisches Objektiv (O2) umfasst, wobei die optischen Charakteristiken des ersten Objektivs mit denen des zweiten Objektivs im Wesentlichen identisch sind, wobei das stereoskopische Abbildungssystem ein ebene teilreflektierende Platte (M1) umfasst, die vor dem ersten Objektiv angeordnet und in einem bestimmten Winkel auf der optischen Achse des ersten Objektivs geneigt ist, **dadurch gekennzeichnet, dass**:
das erste optische Objektiv eine optische Unterbaugruppe umfasst, die zwei Gruppen von Linsen (L1, L2) umfasst, die vor dem ersten optischen Objektiv angeordnet ist und eine dicke Glasplatte (E) umfasst, wobei die Platte zwischen der ersten Gruppe von Linsen (L1) und der zweiten Gruppe von Linsen (L2) des ersten optischen Objektivs angeordnet ist, und
wobei das zweite optische Objektiv eine optische Unterbaugruppe (L1, L2) umfasst, die mit der des ersten Objektivs optisch identisch ist, in der die dicke Platte durch ein Reflexionsprisma (P) ersetzt ist, das eine ebene reflektierende Fläche aufweist, wobei die optische Dicke des Reflexionsprismas mit der der dicken Glasplatte identisch ist, wobei das Prisma zwischen der ersten Gruppe von Linsen (L1) und der zweiten Gruppe von Linsen (L2) des zweiten optischen Objektivs angeordnet ist, wobei die ebene reflektierende Fläche der teilreflektierenden Platte (M1) in Bezug auf das erste optische Objektiv (O1) gegenüberliegt, orientiert zur Rückseite des zweiten optischen Objektivs und im Wesentlichen um selben bestimmten Winkel geneigt wie der der teilreflektierenden Platte auf der optischen Achse des zweiten Objektivs, so dass der Hauptteil der optischen Achse des zweiten Objektivs im Wesentlichen parallel zur optischen Achse des ersten Objektivs ist.

2. Stereoskopisches Abbildungssystem nach Anspruch 1, **dadurch gekennzeichnet, dass** die zwei optischen Unterbaugruppen optische Leistungen haben.

3. Stereoskopisches Abbildungssystem nach Anspruch 1, **dadurch gekennzeichnet, dass** das erste optische Objektiv und das zweite optische Objektiv Zooms mit konvergentdivergentem optischen Variablen (L3, L4) sind.

4. Stereoskopisches Abbildungssystem nach einem der vorherigen Ansprüche, **dadurch gekennzeichnet, dass** die sich vor den Objektiven befindlichen Unterbaugruppen bewegliche Gruppen umfassen, die die Fokussierung in Abhängigkeit von der Distanz der zu beobachtenen Szene gewährleisten.

5. Stereoskopisches Abbildungssystem nach einem der vorherigen Ansprüche, **dadurch gekennzeichnet, dass** in der normalen Gebrauchsposition die optischen Achsen des ersten optischen Objektivs und des zweiten optischen Objektivs in einer gemeinsamen, im Wesentlichen vertikalen Ebene liegen.

## Claims

1. A stereoscopic imaging system comprising a first camera (C1) comprising a first optical objective (O1) and a second camera (C2) comprising a second optical objective (02), the optical features of the first objective being substantially identical to those of the second objective, said stereoscopic imaging system comprising a flat semi-reflective plate (M1) disposed in front of the first objective and inclined at a determined angle on the optical axis of said first objective, **characterised in that**:
the first optical objective comprises an optical sub-assembly comprising two groups of lenses (L1, L2) disposed at the front of said first optical objective and comprising a thick glass plate (E), said plate being disposed between the first group of lenses (L1) and the second group of lenses (L2) of said first optical objective; and
the second optical objective comprises an optical sub-assembly (L1, L2) that is optically identical to that of the first objective, in which sub-assembly the thick plate is replaced by a reflection prism (P) comprising a flat reflective surface, the optical thickness of said reflection prism being identical to that of the thick glass plate, said prism being disposed between the first group of lenses (L1) and the second group of lenses (L2) of said second optical objective, said flat reflective surface being opposite the semi-reflective plate (M1) relative to the first optical objective (01), oriented toward the rear of the second optical objective and substantially inclined by the same determined angle as that of the semi-reflective plate on the optical axis of said second objective, so that the main part of the optical axis of the second objective is substantially parallel to the optical axis of the first objective.

2. The stereoscopic imaging system as claimed in claim 1, **characterised in that** the two optical sub-assemblies have optical powers.

3. The stereoscopic imaging system according to claim 1, **characterised in that** the first optical objective and the second optical objective are convergent-divergent optical variator zooms (L3, L4).

4. The stereoscopic imaging system as claimed in any one of the preceding claims, **characterised in that** the sub-assemblies located at the front of the objectives comprise movable groups for providing focusing as a function of the distance from the scene to be observed.

5. The stereoscopic imaging system as claimed in any one of the preceding claims, **characterised in that**, in the normal operating position, the optical axes of the first optical objective and of the second optical objective are in a common, substantially vertical plane.
